# EUROPEAN PATENT APPLICATION

(11) **EP 0 531 087 A1**
(43) Date of publication of application: **10.03.1993**
(21) Application number: 92307918.0
(22) Date of filing: 01.09.1992
(51) Int. Cl.: G21C 17/116

(54) **Mounting device for supporting nuclear reactor neutron monitoring instrument**

(30) Priority: 03.09.1991 US 754095
(71) Applicant: GENERAL ELECTRIC COMPANY, Schenectady, NY 12345 (US)
(72) Inventor: Karan, Lawrence Francis, Morgan Hill, California 95037 (US); Nowicki, Donald Edward, Vacaville, California 95687 (US); Whitman, John Michael, San Jose, California 95120 (US)
(74) Representative: Lupton, Frederick

(57) **Abstract**

A neutron monitoring instrument having an improved mounting device for service in a nuclear reactor pressure vessel is disclosed. The improved mounting device provides added protection for operating and maintenance personnel from exposure to radiation external of the reactor pressure vessel.

## Description

### FIELD OF THE INVENTION

This invention relates to neutron monitoring instruments utilized within nuclear reactor pressure vessels in and about the core of fissionable fuel to ascertain the neutron flux at various locations for ascertaining levels of fission and efficiency thereof throughout the reactor unit. The invention specifically deals with the mounting means for such neutron monitoring instruments rods, and in particular with an improvement therein which enhances the protection of operating and maintenance personnel from exposure to radiation escaping from within the nuclear reactor pressure vessel.

Typical neutron monitoring instrument rods which comprise a subject of this invention are disclosed in detail in U.S. Letters Patent No. 3,565,760, issued February 23, 1971, and No. 4,121,106, issued October 17, 1978.

### BACKGROUND OF THE INVENTION

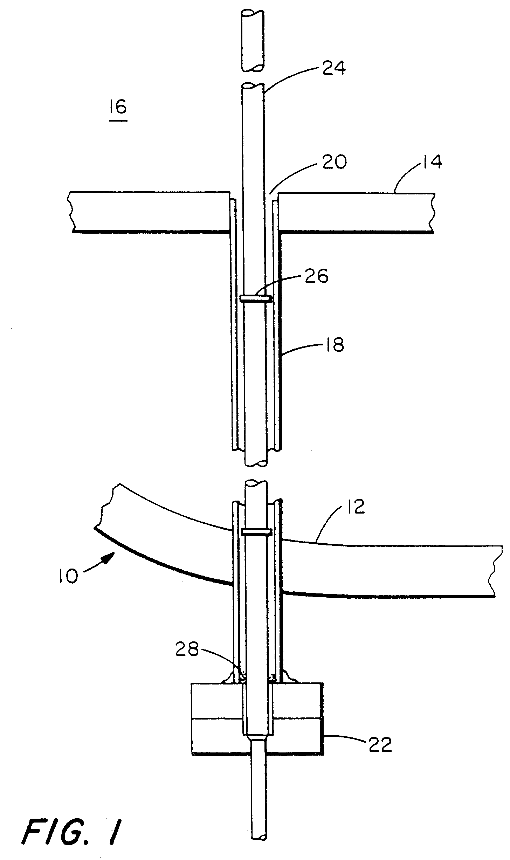

Some categories of water cooled and moderated nuclear fission reactor plants used for producing steam to generate electrical power, such as typical commercial boiling water reactors, utilize neutron moderating instruments in the form of long rod units having mounting devices which extend out beyond the protective enclosure of the nuclear reactor pressure vessel. Typical mounting devices for neutron monitoring instrument rods comprise tubular housing that pass up through a lower portion of the reactor pressure vessel bottom wall and extending up into an opening in the generally horizontal plate provided to support the core of fissionable fuel. The lower end of the instrument rod supporting tubular housing which decends downward out from the reactor pressure vessel is closed and provides a base support and stabilizing means for the neutron monitoring instrument rod mounted therein. This common arrangement is shown in Figure 1 of the drawings illustrating the prior art means.

As is well known in the nuclear industry and art, radioactive containing debris or refuse inevitably occurs within the cooling water medium contained in the reactor pressure vessel due, among other sources, to corrosion, precipitation of insolubles and radiating products. Such debris or refuse typically entrains radioactive material or is rendered radioactive from exposure to the high level radiation emitted from the fuel core, and is carried throughout the reactor pressure vessel within the circulating coolant water. However, insoluble debris or refuse matter in large part ultimately settles out down to the lower most areas of the reactor pressure vessel and accumulates there. This settling out of radioactive containing debris or refuse from the circulating coolant water normally results in this material finding its way down into the upper open end of the tubular housing for supporting and stabilizing the neutron monitoring instrument rod within the area between the housing and the rod as shown in the illustration of the prior art means. Upon settling down within the tubular housing the radioactive containing debris or refuse is deposited outside of the protective confines of the nuclear reactive pressure vessel, where it is retained unless or until removed which may require a costly reactor shutdown and potentially hazardous and complex measures.

The presence of radiation contaminated material, which can be highly radioactive, outside of the safeguards of the pressure vessel creates a potential hazard to operating and/or maintenance personnel working about or close to the nuclear reactor.

The disclosure and contents of the aforesaid U.S. Letters Patent No. 3,565,760, issued February 23, 1971, and No. 4,121,106, issued October 17, 1978, are incorporated herein by reference.

### SUMMARY OF THE INVENTION

The present invention provides in one aspect an improved mounting device for supporting neutron monitoring instruments within nuclear reactor pressure vessels which impedes the depositing of radioactive containing debris outside of the reactor pressure vessel, comprising the combination of an assembly of a nuclear reactor pressure vessel having a fuel core support plate fixed in a lower portion thereof, at least one neutron monitoring instrument mounting means comprising a tubular housing passing up through a lower portion of the reactor pressure vessel and extending upward into an opening in the core support plate, said tubular housing being closed at its lower end, a neutron monitoring instrument rod having its lower portion installed within the tubular housing with its lower end resting upon the closed end of the tubular housing and the upper portion of the instrument rod projecting up beyond the core support plate to a designated monitoring location, a disk having a center opening encircling the instrument rod above the core support plate and held in position around the instrument rod in contact with the upper surface of the core support plate for providing a barrier to settling radioactive containing debris descending down into the tubular housing about the instrument rod outside of the reactor pressure vessel.

Further aspects of this invention are set forth in Claims 5 and 10.

This invention comprises an improved mounting device for supporting and stabilizing neutron monitoring instruments within nuclear reactor pressure vessels which impedes the deposition of radioactive containing debris and the like outside of the reactor pressure vessel. The mounting device of this invention comprises a combination of components providing a new assembly having means for precluding insoluble material from finding its way into and settling within the tubular housings which support and stabilize neutron monitoring instrument rods inside of reactor pressure vessels.

It is a feature of this invention to provide an improved mounting device for supporting and stabilizing neutron monitoring instruments in nuclear reactor pressure vessels.

It is also a feature of this invention to provide a mounting device for supporting and stabilizing neutron monitoring instruments within a nuclear reactor pressure vessel that inhibits the escape of radioactive containing material from the nuclear reactive pressure vessel.

It is a feature of this invention to provide measures for protecting operating and/or maintenance personnel from possible exposure to radiation.

It is a still further feature of this invention to provide an economical and uncomplicated, effective means for preventing radioactive containing debris or waste from passing out from and settling outside of the protective confines of a nuclear reactor pressure vessel.

It is a still further feature of this invention to provide an effective barrier to the escape of settling radioactive containing debris or waste out from a nuclear reactor pressure vessel.

### BRIEF DESCRIPTION OF THE DRAWING

Figure 1 of the drawings comprises a partial sectional view of a portion of a nuclear reactor pressure vessel illustrating a mounting device for neutron monitoring instruments of the prior art.

Figure 2 of the drawings comprises a partial sectional view of a portion of a nuclear reactor pressure vessel illustrating the unique improved mounting device for neutron monitoring instruments of this invention.

### DETAILED DESCRIPTION OF THE INVENTION

Referring to Figure 1 of the drawing, a common type of prior art mounting device or means for supporting a neutron monitoring rod instrument in a nuclear reactor plant 10 is illustrated. Nuclear reactor plant 10 includes a closed reactor pressure vessel 12, shown in part, containing a fuel core support plate 14 positioned generally horizontally in the lower area of the pressure vessel 12. Support plate 14 provides a base for a core of fissionable fuel material (not shown).

A neutron monitoring instrument rod mounting device comprises a tubular housing 18 which passes up through a lower or bottom portion of the wall defining the reactor pressure vessel 12 and extends upward into an opening 20 in the fuel core support plate 14. The lower end of tubular housing 18 is provided with a closure means 22, such as a blocking flange, shutting off the end of the tubular housing projecting out from the reactor pressure vessel 12 to maintain the integrity of the vessel and its pressurized contents.

The neutron monitoring instrument 24 in the form of a elongated rod is supported and stabilized in its designed generally vertical position by being installed with its lower end portion inserted down within the tubular housing 18 and its terminal end resting upon the closed end 22 of the housing 18. However, neutron monitoring instrument rod 24 is of substantially smaller outside diameter than the inside diameter of the tubular housing 18 whereby several guide rings 26 are preferably provided encircling the instrument rod 24 in the portion installed within the housing 18 to reduce lateral play.

Due to the substantially inevitable occurrence of insoluble debris or refuse entrained within the reactor coolant water circulating throughout the reactor coolant system, solids resulting from any of several sources such as corrosion, radiation products and insoluble precipitates, over time settle out and accumulate in the lower most portions of the reactor coolant system, in particular the bottom of the reactor pressure vessel. This sediment typically finds its way into the space between the neutron monitoring instrument rods 24 and the tubular housing 18 and forms deposits 28 in the sealed lower most end 22 thereof out beyond the protective reactor pressure vessel 12.

Since this deposited sediment comprising debris or refuse contains radioactive material resulting from entrained radiation products and induced radiation, it creates a health hazard external of the protective reactor vessel to operating and maintenance reactor plant personnel, and thus imposes time or exposure limitations upon their activities in locations near this external radiation source.

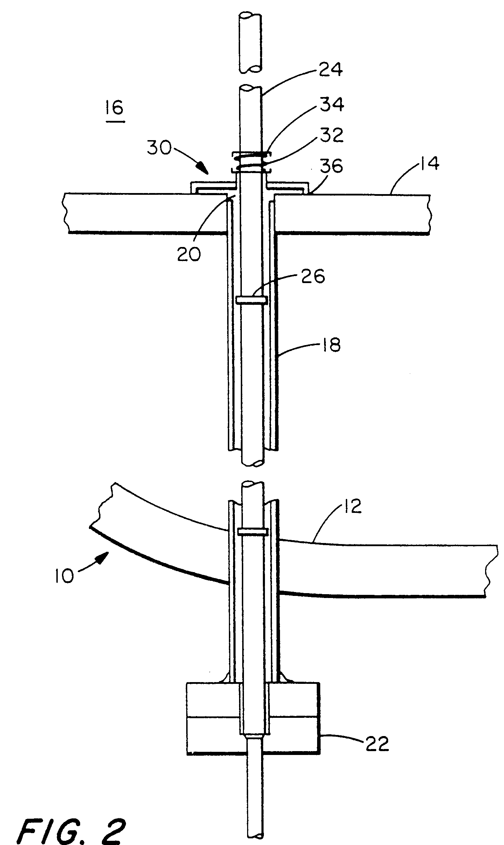

In accordance with this invention, and as illustrated in Figure 2 of the drawings, a protective barrier comprising a disk 30, and having a center opening for receiving and encircling the neutron monitoring instrument rod 24, is provided to surround the instrument rod 24 and contact the upper surface of the fuel core supported plate 14 covering the annular open portion between the instrument rod 24 and tubular housing 18. The disk 30, surrounding the instrument rod 24 above the core support plate 14, forms a barrier preventing settling radioactive containing debris from descending down into and depositing in the tubular housing 18 about the instrument rod 24 outside of the nuclear reactor pressure vessel 12.

In a preferred embodiment of the invention, a spring means 32, such as a coil spring encircling the instrument rod 24, is provided positioned above the disk barrier 30 to bias or load and hold the disk 30 pressing downward upon the upper surface of the fuel core support plate 14 and prevent any dislocation of the disk 30. A washer 34 encircling and fixed on the instrument rod 24 above coil spring 32 can be utilized to secure the spring 32 in an apt position around the instrument rod 24 for effectively applying pressure from the barrier disk 30 upon the surface of the fuel core support plate 14.

An additional preferred option of this invention is to provide the barrier disk 30 with a ring flange 36 extending downward form the periphery of the disk 30 for effective closing off the area of the upper surface of the core support plate 14 about the opening 20 therein and the upper open end of the tubular housing 18.

## Claims

1. An improved mounting device for supporting neutron monitoring instruments within nuclear reactor pressure vessels which impedes the depositing of radioactive containing debris outside of the reactor pressure vessel,
comprising the combination of an assembly of:
a nuclear reactor pressure vessel having a fuel core support plate fixed in a lower portion thereof,
at least one neutron monitoring instrument mounting means comprising a tubular housing passing up through a lower portion of the reactor pressure vessel and extending upward into an opening in the core support plate, said tubular housing being closed at its lower end,
a neutron monitoring instrument rod having its lower portion installed within the tubular housing with its lower end resting upon the closed end of the tubular housing and the upper portion of the instrument rod projecting up beyond the core support plate to a designated monitoring location,
a disk having a center opening encircling the instrument rod above the core support plate and held in position around the instrument rod in contact with the upper surface of the core support plate for providing a barrier to settling radioactive containing debris descending down into the tubular housing about the instrument rod outside of the reactor pressure vessel.

2. The improved mounting device for supporting neutron monitoring instruments within nuclear reactor pressure vessels of claim 1, wherein guide rings are provided on the lower portion of the instrument rod installed within the tubular housing.

3. The improved mounting device for supporting neutron-monitoring instruments within nuclear reactor pressure vessels of claim 1, wherein the disk encircling the instrument rod is provided with a sealing member consisting of a ring extending downward from the periphery of the disk.

4. The improved mounting device for supporting neutron monitoring instruments within nuclear reactor pressure vessel of claim 1, wherein the disk encircling the instrument rod is provided with a spring to press the disk downward against the upper surface of the core support plate.

5. An improved mounting device for supporting neutron monitoring instruments within nuclear reactor pressure vessels which impedes the depositing of radioactive containing debris outside of the reactor pressure vessel,
comprising the combination of an assembly of:
a nuclear reactor pressure vessel having a fuel core support plate fixed in a lower portion thereof,
at least one neutron monitoring instrument mounting means comprising a tubular housing passing up through a lower portion of the neutron reactor pressure vessel and extending upward into an opening in the core support plate, said tubular housing being closed at its lower end outside of the reactor pressure vessel,
a neutron monitoring instrument rod having its lower portion installed within the tubular housing with its lower end resting upon the closed end of the tubular housing and the upper portion of the instrument rod projecting up beyond the core support plate to a designated monitoring location,
a disk having a center opening encircling the instrument rod above the core support plate and having a spring holding the disk in position around the instrument rod in contact with the upper surface of the core support plate for providing a barrier to settling radioactive containing debris descending down into the tubular housing about the instrument rod outside of the reactor vessel.

6. The improved mounting-device for supporting neutron monitoring instruments within nuclear reactor pressure vessels of claim 5, wherein guide rings are provided on the lower portion of the instrument rod installed within the tubular housing.

7. The improved mounting device for supporting neutron monitoring instruments within nuclear reactor pressure vessels of claim 5, wherein the disk encircling the instrument rod is provided with a sealing member consisting of a ring flange extending downward from the periphery of the disk.

8. The improved mounting device for supporting neutron monitoring instruments within nuclear reactor pressure vessel of claim 5, wherein the instrument rod is provided with a fixed washer positioned adjoining the upper surface of the fuel core support plate for securing the spring for holding the disk in position.

9. The improved mounting device for supporting neutron monitoring instruments within nuclear reactor pressure vessels of claim 5, wherein the disk encircling the instrument rod is provided with a spiral spring surrounding the instrument rod to press the disk downward against the upper surface of the core support plate.

10. An improved mounting device for supporting neutron monitoring instruments within nuclear reactor pressure vessels which impedes the depositing of radioactive containing debris outside of the reactor pressure vessel,
comprising the combination of an assembly of:
a nuclear reactor pressure vessel having a fuel core support plate fixed in a lower portion thereof,
at least one neutron monitoring instrument mounting means comprising a tubular housing passing up through a lower wall portion of the neutron reactor pressure vessel and extending upward into an opening in the core support plate, said tubular housing being closed at its lower end outside of the reactor pressure vessel,
a neutron monitoring instrument rod having its lower portion installed within the tubular housing with its lower end resting upon the closed end of the tubular housing and the upper portion of the instrument rod projecting up beyond the core support plate to a designated monitoring location,
a disk having a center opening encircling the instrument rod above the core support plate and having a spiral spring surrounding the instrument rod held in position with a fixed washer above the spiral spring for holding the disk in position around the instrument rod in contact with the upper surface of the core support plate, said disk being provided with a sealing member consisting of a ring flange extending downward from the periphery of the disk for providing a barrier to settling radiation containing debris descending down into the tubular housing about the instrument rod outside of the reactor pressure vessel.
